# EUROPEAN PATENT SPECIFICATION

(11) **EP 4 045 825 B1**
(45) Date of publication and mention of the grant of the patent: **14.05.2025**
(21) Application number: 20829349.8
(22) Date of filing: 02.12.2020
(51) Int. Cl.: F16K 27/02, F15B 13/01

(54) **LOAD HOLDING VALVE**
LASTHALTEVENTIL
SOUPAPE DE MAINTIEN DE CHARGE

(30) Priority: 10.12.2019 IT 201900023556
(43) Date of publication of application: 24.08.2022
(73) Proprietor: Atlantic Fluid Tech S.r.l., 41018 San Cesario sul Panaro (MO) (IT)
(72) Inventor: STORCI, Christian, 41121 Modena (IT)
(74) Representative: Luppi Intellectual Property S.r.l.
(86) International application number: PCT/IB2020/061364
(87) International publication number: WO 2021/116830

(56) References cited:
- EP-A1- 2 473 745
- EP-A2- 2 549 124
- EP-B1- 2 473 745
- EP-B1- 2 549 124
- GB-A- 1 582 491

## Description

### Background of the invention

The invention relates to a hydraulic valve traversed by a pressurized fluid, in particular a hydraulic valve configured for operating with relatively high flowrates of fluid (for example up to values of the order of hundreds of litres a minute) and at relatively high pressures (for example fluid pressure up to 420 bar).

Specifically, but not exclusively, the valve in question can be applied to an earth-moving machine, in particular to support even very great suspended loads, such as for example an articulated arm of an excavator, and to maintain in a desired position the aforesaid suspended loads for a set interval of time, sometimes also for many hours. The valve in question is supplied and traversed by a pressurized fluid that is sent to an actuator, in general a dual effect hydraulic cylinder, which is in turn connected to the load to be supported.

In particular, it refers to a valve in accordance with the preamble to claim 1. Such a valve is shown, for example, by patent publication EP 2 549 124 A2, in the name of the applicant. GB 1582491 A **discloses a hydraulic safety device with a pilot valve connected to an inclined pilot channel.**

Various aspects of prior art valves are improvable.

In the first place, it is desirable to limit hydraulic load losses due to the motion of operating fluid inside the hydraulic valve, for example in a load increase and/or decrease step.

Further, it is desirable to limit the deformation that the hydraulic valve could suffer when it is subjected to a sudden and considerable increase of operating fluid (for example sometimes with pressure peaks up to about 1000 bar). This overpressure, especially if it is repeated over time, can even lead to structural drawbacks in the valve such as for example loosening of the closing elements of the openings arranged outside the valve block.

Another drawback of the valves of the prior art consists of the risk of loss and leaks of the operating fluid.

### Summary of the invention

One object of the invention is to make a valve that is able to obviate one or more of the drawbacks of the prior art.

One object of the invention is to provide an alternative hydraulic valve to the prior art, in particular a hydraulic valve of the type that is usable in an earth-moving machine.

One advantage is to limit the hydraulic load losses due to the motion of operating fluid inside the hydraulic valve.

One advantage is to limit the deformation of parts of the valve due to a sudden and considerable increase in the pressure of the operating fluid.

One advantage is to provide a hydraulic valve that is particularly tough and resistant to possible overpressure.

One advantage is to give rise to a hydraulic valve that is able to reduce or eliminate the risk of losses or leaks of the operating fluid.

One advantage is to make available a constructionally simple and cheap hydraulic valve.

Such objects and advantages, and still others, are reached by a hydraulic valve according to one or more of the claims set out below.

In one embodiment, a valve comprises a valve block that is made as a single piece, for example by moulding molten material in a forming cavity, and that comprises internally a first conduit that connects two outer openings for the transit of an operating fluid, one of which is arranged on an outer side of the valve block, a second conduit that connects another two outer openings for the transit of the operating fluid, one of which is arranged on the aforesaid outer side of the valve block, and at least two connecting conduits, each of which connects the first conduit to the second conduit, in which a proximal connection conduit is nearer the aforesaid outer side of the valve block and a distal connection conduit is further from the aforesaid outer side of the valve block, and in which the distal connection conduit extends along an axis that tilts so as to approach the aforesaid outer side of the valve block proceeding from the first conduit to the second conduit.

The longitudinal axis of the distal connection conduit may be, in particular, of curved shape, i.e. tilted with a variable tilt that can vary continuously and progressively.

The first conduit mat comprise, in particular, a first end portion configured for receiving a closing element for closing the valve and the second conduit may comprise, in particular, a second end portion configured for receiving a containing element containing the valve, the proximate connection conduit being configured, in particular, for placing in reciprocal communication the first end portion and the second end portion.

### Brief description of the drawings

The invention can be better understood and implemented with reference to the attached drawings, which illustrate an embodiment thereof by way of non-limiting example, in which:

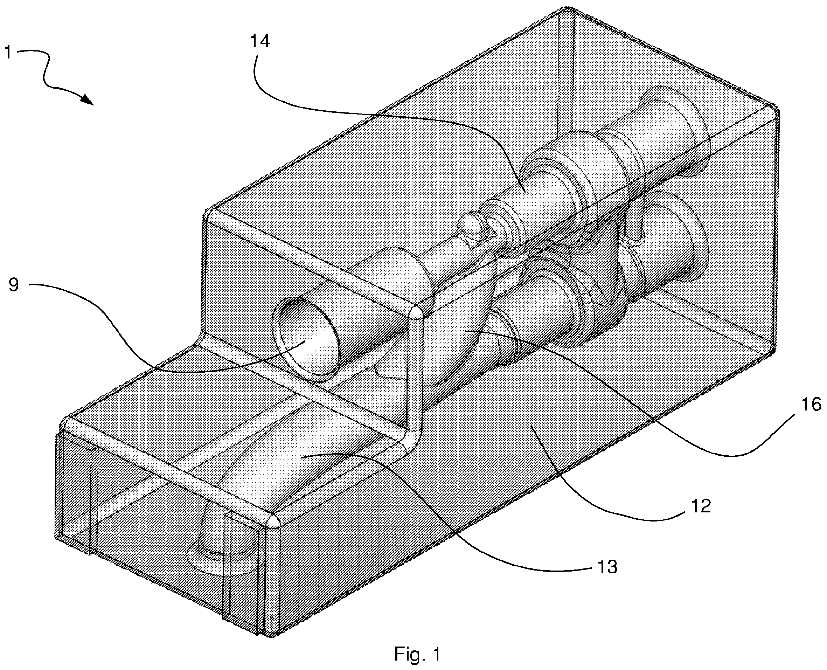

- Figure 1 is a transparent perspective view of an embodiment of a valve block for a hydraulic valve according to the present invention;

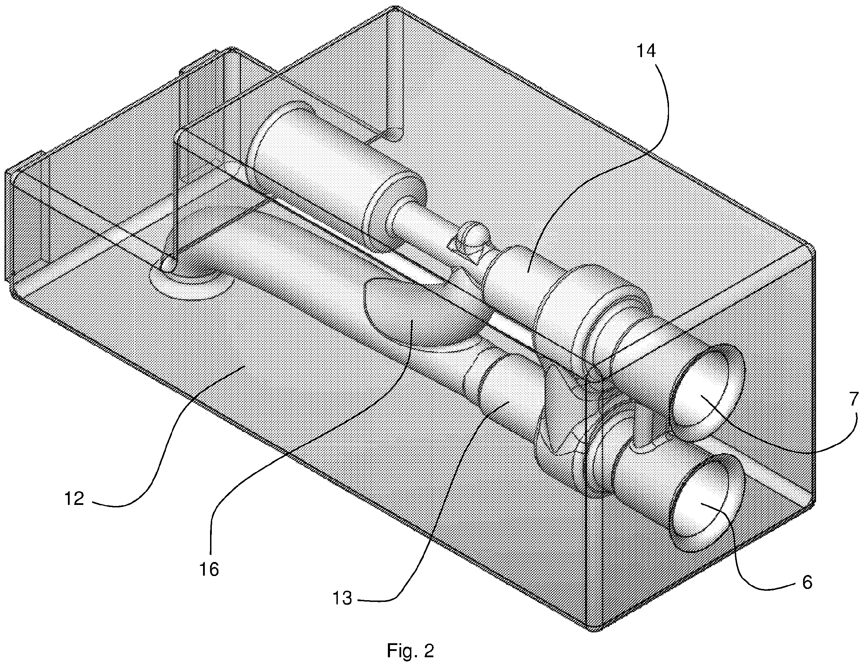

- Figure 2 is a transparent view of the valve block of Figure 1 in a different perspective;

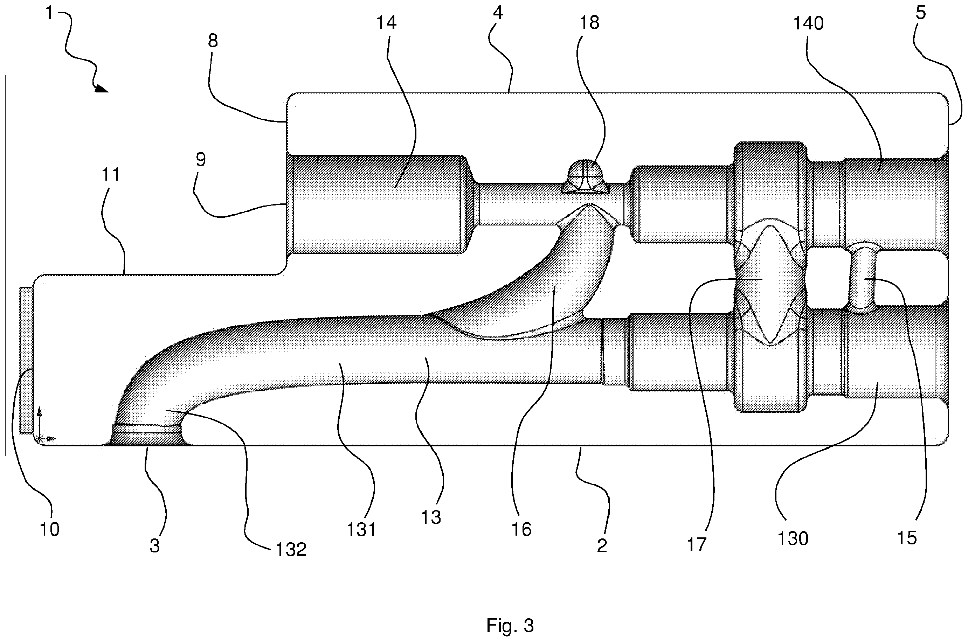

- Figure 3 is a transparent view from one side of the valve block of Figure 1;

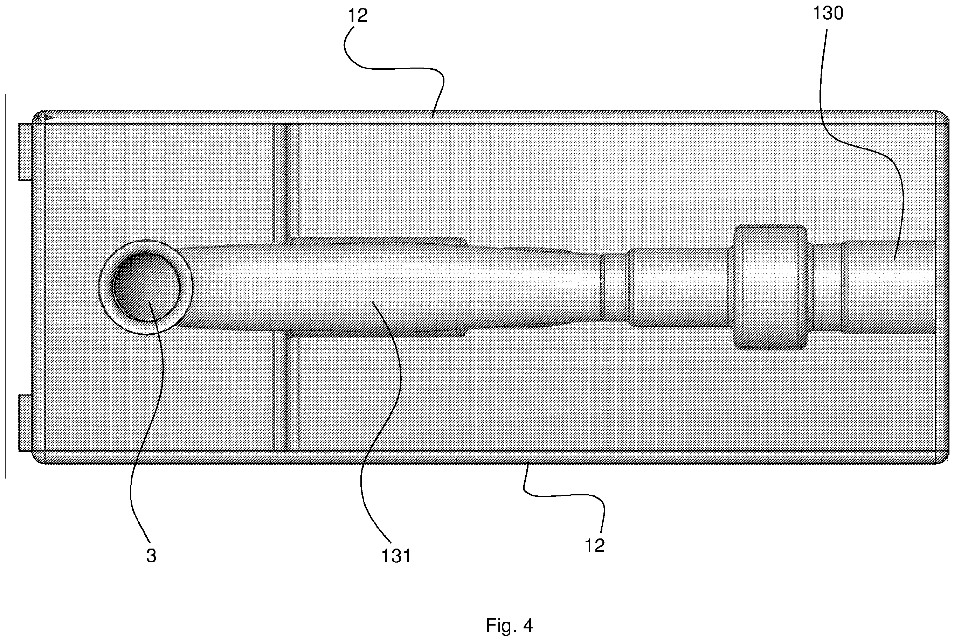

- Figure 4 is a transparent bottom view of the valve block of Figure 1;
- Figure 5 shows a bottom side view of the valve block of Figure 1 and the section according to the plane A-A of the aforesaid view;

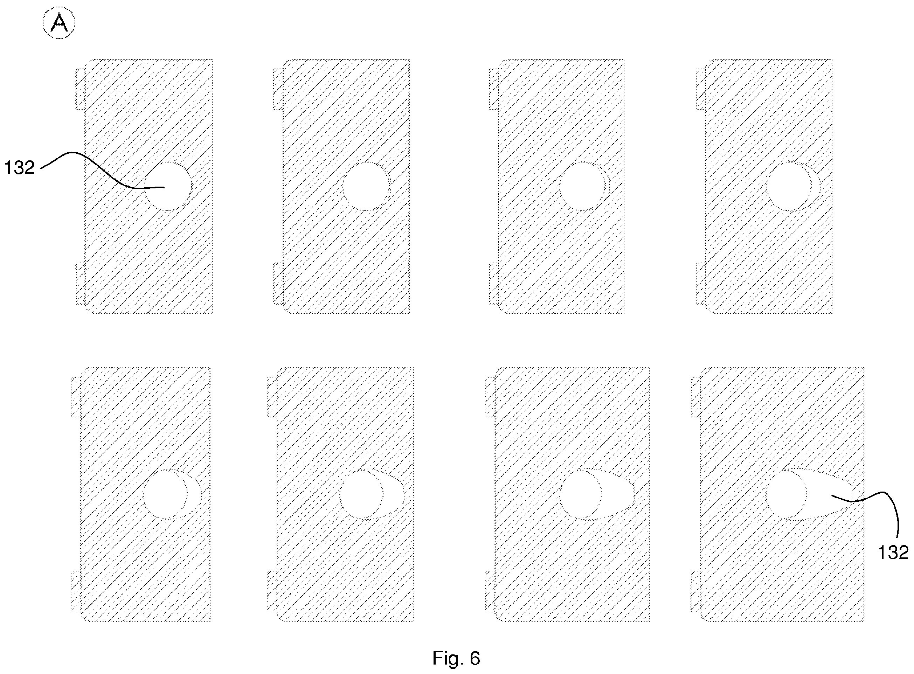

- Figure 6 shows a series of sections of the first conduit that are made near the first opening (indicatively in the zone indicated by A in the section of Figure 5) along section planes that are near one another and parallel to the first side of the valve block of Figure 1;
- Figure 7 shows a series of sections of the first conduit that are made in a conduit portion comprised between the first opening and the distal conduit (indicatively in the zone indicated by B in the section of Figure 5) along section planes that are near to one another and parallel to the third side of the valve block of Figure 1;
- Figure 8 shows a series of sections of the distal conduit (indicatively in the zone indicated by C in the section of Figure 5) that are made along section planes that are near one another and parallel to the first side of the valve block of Figure 1;
- Figure 9 is a perspective transparent view of the valve block of Figure 1 that has been machined further, by stock removal, to obtain various conduits and openings;
- Figure 10 is a transparent view of the valve block of Figure 9 in a different perspective;
- Figure 11 is a section of the valve block of Figure 9.

### Detailed description

With reference to the aforesaid figures, a valve block of a hydraulic valve has been indicated overall with 1. The hydraulic valve may comprise, in particular, a hydraulic valve that is usable, for example, in an earth-moving machine, for example in an excavator.

The valve block 1 may be, in particular, made of a single piece, for example by moulding molten material in a forming cavity. The valve block 1 may be made, in particular, by melting and casting metals in a mould. The metal may comprise, in particular, cast iron or another material that is usable in a foundry process.

The valve block 1 may comprise, in particular, cavity means obtained in the valve block 1 so as to define conduits and openings for the transit of a pressurized fluid (liquid, in particular oil).

The valve block 1 may comprise, in particular, at least one first side 2 that has at least one first opening 3. The first opening 3 may be provided, in particular, for the fluid connection with a hydraulic actuator. The first side 2 may comprise, in particular, a flat outer face of the valve block 1.

The valve block 1 may comprise, in particular, at least one second side 4 that is opposite the first side 2. The second side 4 may comprise, in particular, a flat outer face of the valve block 1. The second side 4 may be, in particular, parallel to the first side 2.

The valve block 1 may comprise, in particular, at least one third side 5 that is arranged between the first side 2 and the second side 4. The third side 5 may have, in particular, at least one second opening 6 and at least one third opening 7. The third side 5 may comprise, in particular, a flat outer face of the valve block 1. The third side 5 may be, in particular, orthogonal to the first side 2. The third side 5 may be, in particular, orthogonal to the second side 4. The third side 5 may be, in particular, adjacent to the first side 2. The third side 5 may be, in particular, adjacent to the second side 4.

The valve block 1 may comprise, in particular, at least one fourth side 8 that is opposite the third side 5. The fourth side 8 may have, in particular, at least one fourth opening 9. The fourth side 8 may comprise, in particular, a flat outer face of the valve block 1. The fourth side 8 may be, in particular, orthogonal and/or adjacent to the second side 4. The fourth side 8 may be, in particular, parallel to the third side 5.

The valve block 1 may comprise, in particular, at least one fifth side 10 that is opposite the third side 5. The fifth side 10 may be, in particular, so arranged that a distance of the fifth side 10 from the third side 5 is greater than a distance of the fourth side 8 from the third side 5. The fifth side 10 may comprise, in particular, a flat outer face of the valve block 1. The fifth side 10 may be, in particular, orthogonal and/or adjacent to the first side 2. The fifth side 10 may be, in particular, parallel to the third side 5.

The valve block 1 may comprise, in particular, at least one sixth side 11 that is opposite the first side 2. The sixth side 11 may be, in particular, arranged between the fourth side 8 and the fifth side 10. The sixth side 11 may comprise, in particular, a flat outer face of the valve block 1. The sixth side 11 may be, in particular, orthogonal and/or adjacent to the fourth side 8. The sixth side 11 may be, in particular, orthogonal and/or adjacent to the fifth side 10. The sixth side 11 may be, in particular, parallel to the first side 2. The sixth side 11 may be, in particular, parallel to the second side 4.

The valve block 1 may comprise, in particular, at least two further sides 12 that are opposite one another. Each of the two further sides 12 may comprise, in particular, a flat outer face of the valve block 1. The first side 2 and/or the second side 4 and/or the third side 5 and/or the fourth side 8 and/or the fifth side 10 and/or the sixth side 11 may be, in particular, arranged between the two further sides 12. Each of the two further sides 12 may be, in particular, orthogonal and/or adjacent to the first side 2 and/or to the second side 4 and/or to the third side 5 and/or to the fourth side 8 and/or to the fifth side 10 and/or to the sixth side 11.

The valve block 1 may comprise, in particular, at least one first duct in the form of conduit 13 that connects together the first opening 3 and the second opening 6. The first conduit 13 may comprise, in particular, at least one conduit portion (for example a conduit portion connected to the second opening 6) that extends in length along a rectilinear longitudinal axis. The first conduit 13 may comprise, in particular, at least one conduit portion (for example a conduit portion connected to the first opening 3) that extends in length along a longitudinal axis with variable tilt with several tilt variations or with a continuous tilt variation, in particular along a curved longitudinal axis.

The valve block 1 may comprise, in particular, at least one second duct in the form of conduit 14 that connects together the third opening 7 and the fourth opening 9. The second conduit 14 may be, in particular, provided with a rectilinear longitudinal axis extending over the entire length of the second conduit 14, so that the third opening 7 and the fourth opening 9 can be coaxial.

The valve block 1 may comprise, in particular, at least one connecting proximate conduit 15 for connecting together the first conduit 13 and the second conduit 14. The proximate conduit 15 may be, in particular, arranged at a distance from the third side 5 that is that is less than a distance from the fourth side 8, i.e. the proximate conduit 15 may be nearer the third side 5 than the fourth side 8.

The first conduit 13 may comprise, in particular, a first end portion 130 configured for receiving a closing element (which is not shown) inserted into the second opening 6. The second conduit 14 may comprise, in particular, a second end portion 140 configured for receiving a containing element (which is not shown) inserted into the third opening 7. The proximate conduit 15 may be configured, in particular, for placing in reciprocal communication the first end portion 130 and the second end portion 140.

The closing element and the containing element may comprise, in particular, the identical closing element and the identical containing element (substantially located in the same position to perform substantially the same) disclosed in the patent publication EP 2 549 124 A2. The proximate conduit 15 may perform, in particular, an identical function to that performed by the connecting means 58 disclosed in the patent publication EP 2 549 124 A2.

The valve block 1 may comprise, in particular, at least one distal conduit 16 that connects together the first conduit 13 and the second conduit 14. The distal conduit 16 may be, in particular, arranged at a distance from the third side 5 that is greater than a distance between the third side 5 and the proximate conduit 15. The proximate conduit 15 may be, in particular, arranged between the third side 5 and the distal conduit 16.

The valve block 1 may comprise, in particular, at least one intermediate conduit 17 that connects together the first conduit 13 and the second conduit 14. The intermediate conduit 17 may be, in particular, arranged in an intermediate position between the proximate conduit 15 and the distal conduit 16.

The distal conduit 16 may be so shaped and arranged, in particular, as to extend in length with a longitudinal axis that is so tilted as to approach the third side 5 proceeding from the first conduit 13 to the second conduit 14, as in the specific illustrated embodiment.

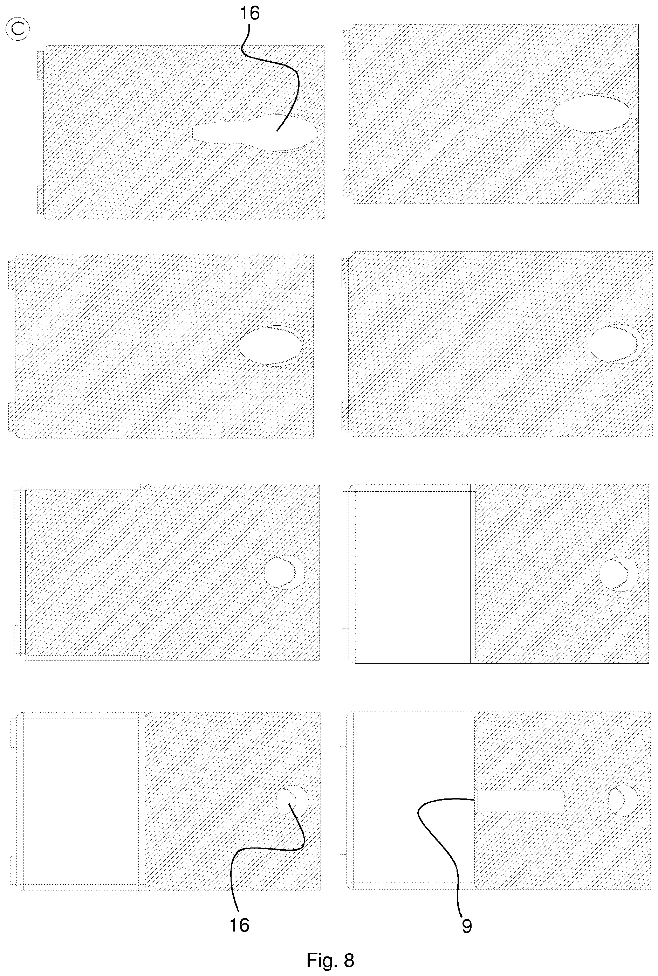

The distal conduit 16 may have, in particular, a transit section that so decreases proceeding from the first conduit 13 to the second conduit 14, in such a manner that, considering passage sections taken on section planes parallel to the first side 2 (see, in particular, Figure 8), at least one transit section nearer the first conduit 13, or further from the second conduit 14, has a greater area than at least one transit section that is further from the first conduit 13, or nearer the second conduit 14.

The distal conduit 16 may be so shaped and arranged, in particular, so as to extend with a longitudinal axis with variable tilt, where tilt means the approach to the third side 5 proceeding to the second conduit 14. This tilt variability may be so made, in particular, so that at least one tilt near the first conduit 13 is greater than at least one tilt near the second conduit 14, as in the specific illustrated embodiment. Near the first conduit 13 the angle of tilt (where angle of tilt means the angle formed by the longitudinal axis of the distal conduit 16 with an orthogonal line between the axis of the first conduit 13 and the axis of the second conduit 14) is relatively greater (for example equal to or near 90° or comprised between 40° and 90°), whereas near the second conduit 14 the angle of tilt is relatively less (for example equal to or near 0° or comprised between 30° and 0°).

The distal conduit 16 may extend, in particular, with a curved longitudinal axis with continuous tilt variation, as in the specific illustrated embodiment. In practice, the longitudinal axis of the distal conduit 16 may be shaped with a gradual curve devoid or angles or sharp and/or discontinuous variations of the angle of tilt, with a gentle and progressive trend.

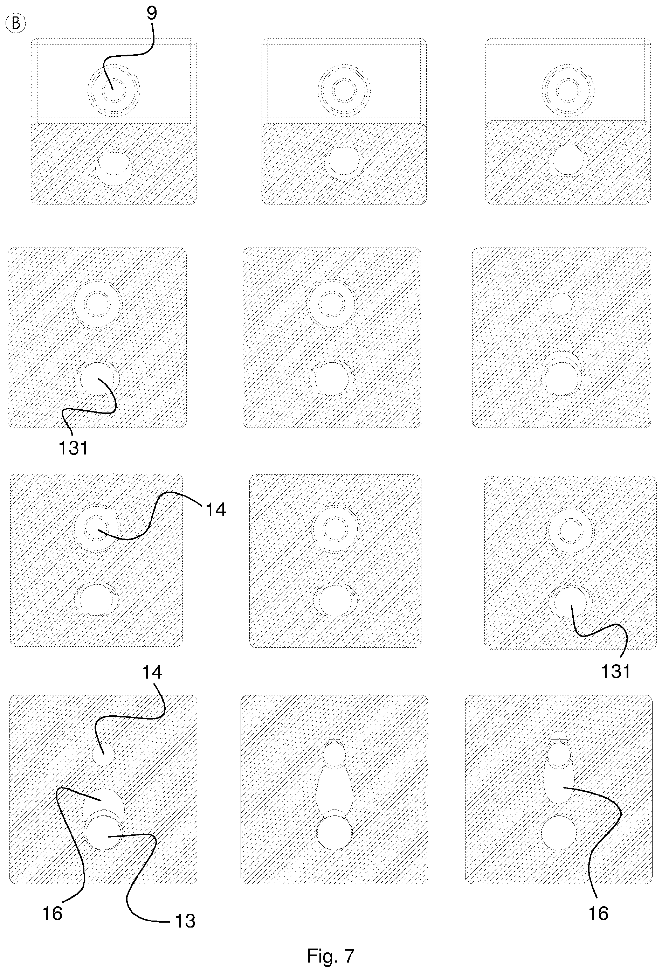

The first conduit 13 may comprise, in particular, at least one conduit portion 131 that is comprised between the first opening 3 and the distal conduit 16 and has an oblong transit section. This transit section may be taken, in particular, on a section plane parallel to the third side (see, in particular, Fig. 7 where it is visible that in some sections the shape of the transit section of the first conduit 13 is in fact oblong). In this context, "oblong" means a dimension that is greater than the other dimensions. This greater dimension may, in particular, extend in a direction that is orthogonal to at least one of the aforesaid two further sides 12.

The second side 4 may be, as in the specific embodiment illustrated here, closed completely by the material of the valve block 1 so that the second side 4, in this embodiment, does not have any opening communicating with the second conduit 14.

The fifth side 10 may be, as in the specific embodiment illustrated here, closed completely by the material of the valve block 1 so that the fifth side 10, in this embodiment, does not have any opening communicating with the first conduit 13.

The sixth side 11 may be, as in the specific embodiment illustrated here, closed completely by the material of the valve block 1 so that the sixth side 11, in this embodiment, does not have any opening communicating with the first conduit 13.

The second conduit 14 may comprise, in particular, a recess 18 that is concave to the second side 4 and arranged opposite an end mouth at which the distal conduit 16 leads into the second conduit 14.

The first conduit 13 may comprise, in particular, at least one connecting portion 132 that is connected to the first opening 3 and extends at least partially with a tilted longitudinal axis, in particular with variable tilt. The aforesaid longitudinal axis of the connecting portion 132 may be, in particular, curved with continuous variation of tilt.

The portion of the valve block 1 bounded by the sixth side 11, i.e. the protruding portion that protrudes from the rest of the valve block 1, may be configured, in particular, to connect the valve block 1 to the machine (for example the excavator) on which the valve operates. In the protruding portion, it is possible to make a plurality of through holes 22 that are suitable for receiving mechanical fixing means, for example screws, for connecting the valve block 1 to the machine. The protruding portion projects from the rest of the valve block 1 so that the valve block 1, seen laterally, is approximately "L"-shaped.

The hydraulic valve may comprise, in particular, various elements (which are not illustrated) that can be associated with the valve block 1. The hydraulic valve may comprise, for example, a containing element, in particular identical to the containing element 16 disclosed in EP 2 549 124 A2. The hydraulic valve may comprise, for example, a closing element, in particular identical to the closing element 14 disclosed in EP 2 549 124 A2.

The hydraulic valve may comprise, for example, seal means, housed in an outer side wall of the containing element, in particular identical to the seal means 64 disclosed in EP 2 549 124 A2.

The hydraulic valve may comprise, for example, further seal means housed in a outer side wall of the closing element, in particular identical to the further seal means 66 disclosed in EP 2 549 124 A2.

The hydraulic valve may comprise, for example, a pilot piston housed in the second conduit 14, in particular identical to the pilot piston 37 disclosed in EP 2 549 124 A2.

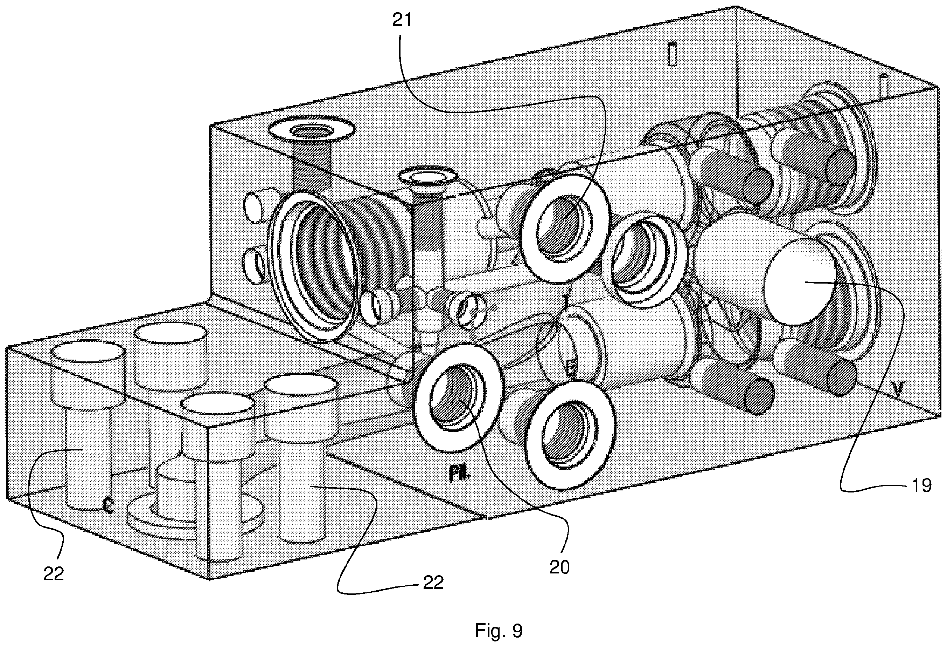

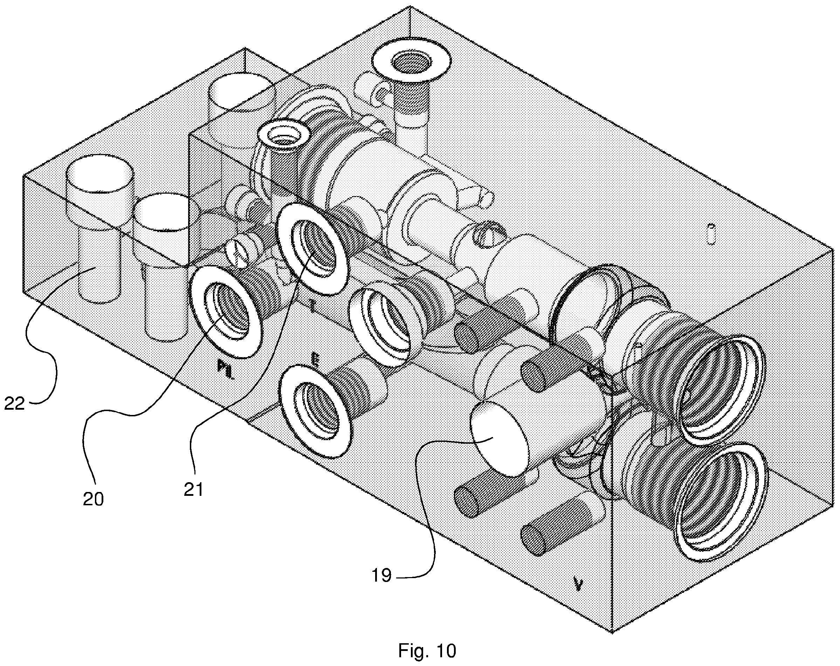

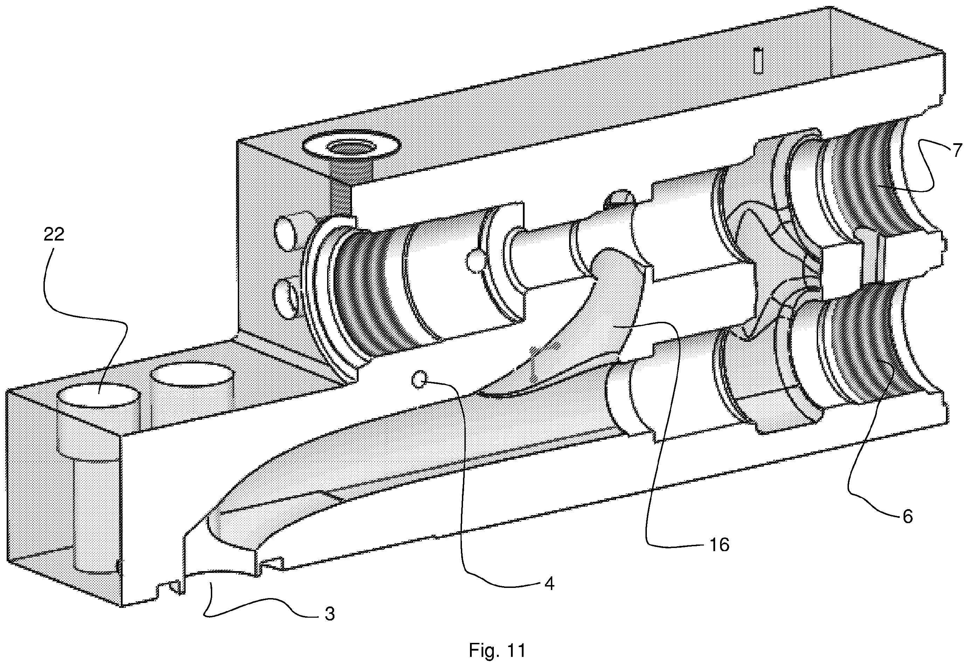

In Figures 9 to 11 the valve block 1 of the preceding figures is illustrated, that is was made by melting and casting metals in a mould in a forming cavity of a mould, and can be further machined, by stock removal, to obtain various conduits and openings that can be obtained in the body of the valve block 1 to be part of the hydraulic valve.

The hydraulic valve may comprise, for example, at least one feeding opening 19 arranged on at least one of the two further sides 12. The feeding opening 19 may be, in particular, identical to the feeding opening disclosed in EP 2 549 124 A2 and indicated with the numeric reference 3.

The hydraulic valve may comprise, for example, at least pilot opening 20 arranged on at least one of the two further sides 12. The pilot opening 20 may be, in particular, identical to the pilot opening 4 disclosed in EP 2 549 124 A2.

The hydraulic valve may comprise, for example, at least one drainage opening 21 arranged on at least one of the two further sides 12. The drainage opening 21 may be, in particular, identical to the drainage opening 5 disclosed in EP 2 549 124 A2.

The hydraulic valve may comprise, for example, through holes 22 configured for receiving fixing means, for example of the screw type, to fix the hydraulic valve to a machine. The through holes 22 may be, in particular, identical to the through holes 7 disclosed in EP 2 549 124 A2.

The hydraulic valve may further comprise other auxiliary, through or blind holes that for the sake of simplicity have not been numbered.

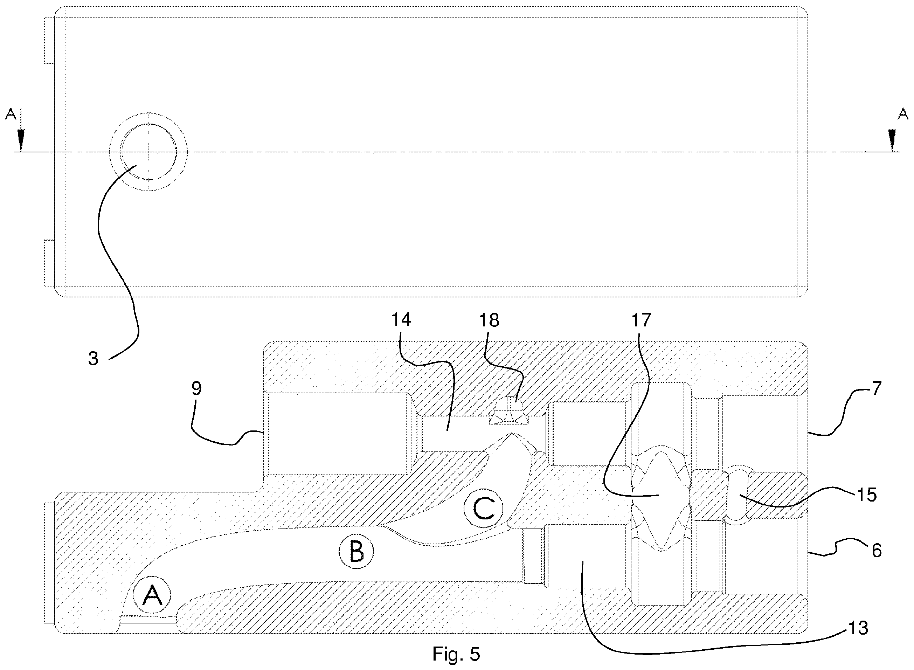

In one use configuration of the valve in question, the first opening 3 may be connected to a hydraulic actuator, the feeding opening 19 may be connected to a hydraulic supply (for example a hydraulic pump, in particular by a hydraulic distributor), the pilot opening 20 may be connected to a pilot line, the drainage opening 21 may be connected to a drain. The hydraulic control circuit of the hydraulic actuator may be, in particular, the same as that disclosed with reference to figure 5 in EP 2 549 124 A2.

The valve block 1 enables a hydraulic valve to be made, in particular a hydraulic valve, for example of the type that is usable in a earth-moving machine, in which the hydraulic load losses due to the motion of the liquid operating inside the valve are significantly limited.

It has also been ascertained that owing to the engagement of the valve block 1 to make the hydraulic valve in question, also the deformation of parts of the valve that could be caused by a sudden and considerable increase in the pressure of the operating fluid is limited.

The valve block 1 also enables a hydraulic valve to be made that is particularly tough and resistant to possible overpressure, in addition to being able to reduce or eliminate the risk of losses or leaks of the operating liquid.

## Claims

1. Hydraulic valve comprising a valve block (1) made in a single piece and provided with cavities to define ducts and openings for the passage of a liquid under pressure, said valve block comprising:
- a first side (2) which has a first opening (3);
- a second side (4) which is opposite to said first side (2);
- a third side (5) which is arranged between said first side (2) and said second side (4) and which has a second opening (6) and a third opening (7);
- a fourth side (8) which is opposite to said third side (5) and which has a fourth opening (9);
- a fifth side (10) which is opposite to said third side (5) and which is arranged so that a distance of said fifth side (10) from said third side (5) is greater than a distance of said fourth side (8 ) from said third side (5);
- a sixth side (11) which is opposite to said first side (2) and is arranged between said fourth side (8) and said fifth side (10);
- two further sides (12) opposite each other and between which said first, second, third, fourth, fifth and sixth sides are arranged;
- a first duct (13) which connects said first opening (3) and said second opening (6) to each other;
- a second duct (14) which connects said third opening (7) and said fourth opening (9) to each other;
- a proximal duct (15) which connects said first duct (13) and said second duct (14) to each other and which is arranged at a distance from said third side (5) which is less than a distance from said fourth side (8);
- a distal duct (16) which connects said first duct (13) and said second duct (14) to each other and which is arranged at a distance from said third side (5) which is greater than a distance between said third side (5) and said proximal duct (15);
**characterized in that** said distal duct (16) extends with a longitudinal axis that is inclined relative to an orthogonal line between the axis of the first duct and the axis of the second duct, so as to approach said third side (5) proceeding from said first duct (13) to said second duct (14) **and in that** said distal duct (16) has a passage section which decreases proceeding from said first duct (13) to said second duct (14), whereby, considering passage sections taken on planes of cross-section parallel to said first side (2), at least one passage section closer to said first duct (13), or more distant from said second duct (14), has a greater area than at least one passage section more distant from said first duct (13), or closer to said second duct (14).

2. Valve according to claim 1, wherein said distal duct (16) extends with a longitudinal axis with variable inclination, where "inclination" is meant the approach to said third side (5), so that at least one inclination near said first duct (13) is greater than at least one inclination near said second duct (14).

3. Valve according to claim **2,** wherein said distal duct (16) extends with a curved longitudinal axis with continuous variation of inclination.

4. Valve according to any one of the preceding claims, wherein said first duct (13) comprises at least one duct portion (131) which is comprised between said first opening (3) and said distal duct (16) and which has an elongated passage section, said passage section being taken on a section plane parallel to said third side (5), where "elongated" is meant having one dimension greater than the others, said greatest dimension being extended in a direction orthogonal to at least one of said two further sides (12).

5. 6-Valve according to any one of the preceding claims, wherein said second side (4) is closed by the material of said valve block (1) so that said second side (4) does not have any opening communicating with said second duct (14).

6. Valve according to any one of the preceding claims, wherein said fifth side (10) is closed by the material of said valve block (1) so that said fifth side (10) does not have any opening communicating with said first duct (13).

7. Valve according to any one of the preceding claims, wherein said sixth side (11) is closed by the material of said valve block (1) so that said sixth side (11) does not have any opening communicating with said first duct (13).

8. Valve according to any one of the preceding claims, wherein said second duct (14) comprises a recess (18) recessed towards said second side (4) and arranged in front of an end mouth at which said distal duct (16) flows into said second duct (14).

9. Valve according to any one of the preceding claims, wherein said first duct (13) comprises at least one connecting portion (132) which terminates at said first opening (3) and which extends with an inclined longitudinal axis.

10. Valve according to claim **9,** wherein said at least one connecting portion (132) extends with an inclined longitudinal axis with variable inclination.

11. Valve according to claim **10,** wherein said longitudinal axis of said connecting portion (132) is curved with a continuous variation of inclination.

12. Valve according to any one of the preceding claims, wherein said valve block (1) comprises an intermediate duct (17) which connects said first duct (13) and said second duct (14) to each other and which is arranged between said proximal duct (15) and said distal duct (16).

13. Valve according to any one of the preceding claims, wherein said first duct (13) comprises a first end portion (130) configured to receive a closing element inserted in said second opening (6).

14. Valve according to claim **13,** wherein said second duct (14) comprises a second end portion (140) configured to receive a containment element inserted in said third opening (7), said proximal duct (15) being configured to put said first end portion (130) and said second end portion (140) into mutual communication.

## Patentansprüche

1. Hydraulikventil umfassend einen Ventilblock (1), der aus einem einzigen Stück hergestellt ist und mit Hohlräumen versehen ist, um Kanäle und Öffnungen für den Durchfluss einer unter Druck stehenden Flüssigkeit zu definieren, wobei der Ventilblock umfasst:
- eine erste Seite (2), die eine erste Öffnung (3) aufweist;
- eine zweite Seite (4), die der ersten Seite (2) gegenüberliegt;
- eine dritte Seite (5), die zwischen der ersten Seite (2) und der zweiten Seite (4) angeordnet ist und eine zweite Öffnung (6) und eine dritte Öffnung (7) aufweist;
- eine vierte Seite (8), die der dritten Seite (5) gegenüberliegt und eine vierte Öffnung (9) aufweist;
- eine fünfte Seite (10), die der dritten Seite (5) gegenüberliegt und die so angeordnet ist, dass ein Abstand der fünften Seite (10) von der dritten Seite (5) größer ist als ein Abstand der vierten Seite (8) von der dritten Seite (5);
- eine sechste Seite (11), die der ersten Seite (2) gegenüberliegt und zwischen der vierten Seite (8) und der fünften Seite (10) angeordnet ist;
- zwei weitere Seiten (12), die einander gegenüberliegen und zwischen denen die erste, zweite, dritte, vierte, fünfte und sechste Seite angeordnet sind;
- einen ersten Kanal (13), der die erste Öffnung (3) und die zweite Öffnung (6) miteinander verbindet;
- einen zweiten Kanal (14), der die dritte Öffnung (7) und die vierte Öffnung (9) miteinander verbindet;
- einen proximalen Kanal (15), der den ersten Kanal (13) und den zweiten Kanal (14) miteinander verbindet und der in einem Abstand von der dritten Seite (5) angeordnet ist, der geringer ist als ein Abstand von der vierten Seite (8);
- einen distalen Kanal (16), der den ersten Kanal (13) und den zweiten Kanal (14) miteinander verbindet und der in einem Abstand von der dritten Seite (5) angeordnet ist, der größer ist als ein Abstand zwischen der dritten Seite (5) und dem proximalen Kanal (15);
**dadurch gekennzeichnet, dass** der distale Kanal (16) mit einer Längsachse verläuft, die relativ zu einer orthogonalen Linie zwischen der Achse des ersten Kanals und der Achse des zweiten Kanals geneigt ist, um sich der dritten Seite (5) zu nähern, wobei er vom ersten Kanal (13) zum zweiten Kanal verläuft (14), **und dass** der distale Kanal (16) einen Durchflussquerschnitt aufweist, der vom ersten Kanal (13) zum zweiten Kanal (14) hin abnimmt, wobei bei Betrachtung von Durchflussquerschnitten auf Querschnittsebenen parallel zu der ersten Seite (2) mindestens ein Durchflussabschnitt, der näher an dem ersten Kanal (13) oder weiter von dem zweiten Kanal (14) entfernt liegt, eine größere Fläche als mindestens ein Durchflussabschnitt aufweist, der weiter von dem ersten Kanal (13) entfernt oder näher an dem zweiten Kanal (14) liegt.

2. Ventil nach Anspruch 1, wobei der distale Kanal (16) mit einer Längsachse mit variabler Neigung verläuft, wobei mit "Neigung" die Annäherung an die dritte Seite (5) gemeint ist, so dass mindestens eine Neigung in der Nähe des ersten Kanals (13) größer ist als mindestens eine Neigung in der Nähe des zweiten Kanals (14).

3. Ventil nach Anspruch 2, wobei der distale Kanal (16) mit einer gekrümmten Längsachse mit kontinuierlicher Neigungsänderung verläuft.

4. Ventil nach einem der vorstehenden Ansprüche, wobei der erste Kanal (13) mindestens einen Kanalabschnitt (131) umfasst, der zwischen der ersten Öffnung (3) und dem distalen Kanal (16) liegt und einen länglichen Durchflussquerschnitt aufweist, wobei der Durchflussquerschnitt in einer Schnittebene parallel zur dritten Seite (5) erfolgt, wobei "länglich" bedeutet, dass eine Abmessung größer als die anderen ist, wobei die größte Abmessung sich in einer Richtung erstreckt, die orthogonal zu mindestens einer der beiden weiteren Seiten (12) verläuft.

5. Ventil nach einem der vorstehenden Ansprüche, wobei die zweite Seite (4) durch das Material des Ventilblocks (1) geschlossen ist, so dass die zweite Seite (4) keine mit dem zweiten Kanal (14) verbundene Öffnung aufweist.

6. Ventil nach einem der vorstehenden Ansprüche, wobei die fünfte Seite (10) durch das Material des Ventilblocks (1) geschlossen ist, so dass die fünfte Seite (10) keine mit dem ersten Kanal (13) verbundene Öffnung aufweist.

7. Ventil nach einem der vorstehenden Ansprüche, wobei die sechste Seite (11) durch das Material des Ventilblocks (1) geschlossen ist, so dass die sechste Seite (11) keine mit dem ersten Kanal (13) verbundene Öffnung aufweist.

8. Ventil nach einem der vorstehenden Ansprüche, wobei der zweite Kanal (14) eine Vertiefung (18) aufweist, die in Richtung der zweiten Seite (4) vertieft ist und vor einer Endmündung angeordnet ist, an der der distale Kanal (16) in den zweiten Kanal (14) mündet.

9. Ventil nach einem der vorstehenden Ansprüche, wobei der erste Kanal (13) mindestens einen Verbindungsabschnitt (132) aufweist, der an der ersten Öffnung (3) endet und mit einer geneigten Längsachse verläuft.

10. Ventil nach Anspruch 9, wobei der mindestens eine Verbindungsabschnitt (132) mit einer geneigten Längsachse mit variabler Neigung verläuft.

11. Ventil nach Anspruch 10, wobei die Längsachse des Verbindungsabschnitts (132) mit einer kontinuierlichen Neigungsänderung gekrümmt ist.

12. Ventil nach einem der vorstehenden Ansprüche, wobei der Ventilblock (1) einen Zwischenkanal (17) umfasst, der den ersten Kanal (13) und den zweiten Kanal (14) miteinander verbindet und zwischen dem proximalen Kanal (15) und dem distalen Kanal (16) angeordnet ist.

13. Ventil nach einem der vorstehenden Ansprüche, wobei der erste Kanal (13) einen ersten Endabschnitt (130) aufweist, der dazu konfiguriert ist, ein in die zweite Öffnung (6) eingesetztes Schließelement aufzunehmen.

14. Ventil nach Anspruch 13, wobei der zweite Kanal (14) einen zweiten Endabschnitt (140) umfasst, der dazu konfiguriert ist, ein in die dritte Öffnung (7) eingesetztes Eindämmungselement aufzunehmen, wobei der proximale Kanal (15) dazu konfiguriert ist, den ersten Endabschnitt (130) und den zweiten Endabschnitt (140) in gegenseitige Verbindung zu bringen.

## Revendications

1. Valve hydraulique comprenant un bloc de valve (1) réalisé en une seule pièce et pourvu de cavités pour définir des conduits et des ouvertures pour le passage d'un liquide sous pression, ledit bloc de valve comprenant :
- un premier côté (2) qui présente une première ouverture (3) ;
- un deuxième côté (4) opposé audit premier côté (2) ;
- un troisième côté (5) qui est disposé entre ledit premier côté (2) et ledit deuxième côté (4) et qui présente une deuxième ouverture (6) et une troisième ouverture (7) ;
- une quatrième côté (8) opposé audit troisième côté (5) et présentant une quatrième ouverture (9) ;
- un cinquième côté (10) qui est opposé audit troisième côté (5) et qui est disposé de telle sorte qu'une distance dudit cinquième côté (10) par rapport audit troisième côté (5) est supérieure à une distance dudit quatrième côté (8) par rapport audit troisième côté (5) ;
- un sixième côté (11) opposé audit premier côté (2) et situé entre ledit quatrième côté (8) et ledit cinquième côté (10) ;
- deux autres côtés (12) opposés l'un à l'autre et entre lesquels sont disposés lesdits premier, deuxième, troisième, quatrième, cinquième et sixième côtés ;
- un premier conduit (13) qui relie ladite première ouverture (3) et ladite seconde ouverture (6) l'une à l'autre ;
- un deuxième conduit (14) qui relie ladite troisième ouverture (7) et ladite quatrième ouverture (9) l'une à l'autre ;
- un conduit proximal (15) qui relie ledit premier conduit (13) et ledit deuxième conduit (14) l'un à l'autre et qui est disposé à une distance dudit troisième côté (5) qui est inférieure à une distance dudit quatrième côté (8) ;
- un conduit distal (16) qui relie ledit premier conduit (13) et ledit second conduit (14) l'un à l'autre et qui est disposé à une distance dudit troisième côté (5) supérieure à une distance entre ledit troisième côté (5) et ledit conduit proximal (15) ;
**caractérisé en ce que** ledit conduit distal (16) s'étend avec un axe longitudinal incliné par rapport à une ligne orthogonale entre l'axe du premier conduit et l'axe du deuxième conduit, de manière à s'approcher dudit troisième côté (5) en allant dudit premier conduit (13) vers ledit deuxième conduit (14), et **en ce que** ledit conduit distal (16) a une section de passage qui diminue en allant dudit premier conduit (13) vers ledit second conduit (14), de sorte que, en considérant des sections de passage prises sur des plans de section transversale parallèles audit premier côté (2), au moins une section de passage plus proche dudit premier conduit (13), ou plus éloignée dudit second conduit (14), a une plus grande surface qu'au moins une section de passage plus éloignée dudit premier conduit (13), ou plus proche dudit second conduit (14).

2. Valve selon la revendication 1, dans laquelle ledit conduit distal (16) s'étend avec un axe longitudinal à inclinaison variable, où l'on entend par "inclinaison" l'approche dudit troisième côté (5), de sorte qu'au moins une inclinaison près dudit premier conduit (13) est plus grande qu'au moins une inclinaison près dudit second conduit (14).

3. Valve selon la revendication 2, dans laquelle ledit conduit distal (16) s'étend selon un axe longitudinal incurvé avec une variation continue de l'inclinaison.

4. Valve selon l'une quelconque des revendications précédentes, dans laquelle ledit premier conduit (13) comprend au moins une portion de conduit (131) qui est comprise entre ladite première ouverture (3) et ledit conduit distal (16) et qui présente une section de passage allongée, ladite section de passage étant prise sur un plan de coupe parallèle audit troisième côté (5), où l'on entend par "allongée" le fait d'avoir une dimension plus grande que les autres, ladite plus grande dimension étant étendue dans une direction orthogonale à au moins l'un desdits deux autres côtés (12).

5. Valve selon l'une quelconque des revendications précédentes, dans laquelle ledit second côté (4) est fermé par le matériau dudit bloc de valve (1) de sorte que ledit second côté (4) ne présente aucune ouverture communiquant avec ledit second conduit (14).

6. Valve selon l'une quelconque des revendications précédentes, dans laquelle ledit cinquième côté (10) est fermé par le matériau dudit bloc de valve (1) de sorte que ledit cinquième côté (10) ne présente aucune ouverture communiquant avec ledit premier conduit (13).

7. Valve selon l'une quelconque des revendications précédentes, dans laquelle ledit sixième côté (11) est fermé par le matériau dudit bloc de valve (1) de sorte que ledit sixième côté (11) ne présente aucune ouverture communiquant avec ledit premier conduit (13).

8. Valve selon l'une quelconque des revendications précédentes, dans laquelle ledit second conduit (14) comprend un renfoncement (18) en retrait vers ledit second côté (4) et disposé devant une bouche d'extrémité au niveau de laquelle ledit conduit distal (16) se déverse dans ledit second conduit (14).

9. Valve selon l'une quelconque des revendications précédentes, dans laquelle ledit premier conduit (13) comprend au moins une partie de connexion (132) qui se termine à ladite première ouverture (3) et qui s'étend avec un axe longitudinal incliné.

10. Valve selon la revendication **9,** dans laquelle ladite au moins une partie de connexion (132) s'étend avec un axe longitudinal incliné avec une inclinaison variable.

11. Valve selon la revendication **10,** dans laquelle ledit axe longitudinal de la partie de connexion (132) est incurvé avec une variation continue de l'inclinaison.

12. Valve selon l'une quelconque des revendications précédentes, dans laquelle ledit bloc de valve (1) comprend un conduit intermédiaire (17) qui relie ledit premier conduit (13) et ledit second conduit (14) entre eux et qui est disposé entre ledit conduit proximal (15) et ledit conduit distal (16).

13. Valve selon l'une quelconque des revendications précédentes, dans laquelle ledit premier conduit (13) comprend une première partie d'extrémité (130) configurée pour recevoir un élément de fermeture inséré dans ladite seconde ouverture (6).

14. Valve selon la revendication **13,** dans laquelle ledit second conduit (14) comprend une seconde partie d'extrémité (140) configurée pour recevoir un élément de confinement inséré dans ladite troisième ouverture (7), ledit conduit proximal (15) étant configuré pour mettre en communication mutuelle ladite première partie d'extrémité (130) et ladite seconde partie d'extrémité (140).
